# EUROPEAN PATENT SPECIFICATION

(11) **EP 0 407 672 B1**
(45) Date of publication and mention of the grant of the patent: **26.06.1996**
(21) Application number: 89311853.9
(22) Date of filing: 16.11.1989
(51) Int. Cl.: A01N 35/02

(54) **Oderless mycobactericidal compositions**
Geruchlose mykobakterizide Zusammensetzungen
Compositions mycobactéricides inodores

(30) Priority: 11.07.1989 US 378053
(43) Date of publication of application: 16.01.1991
(73) Proprietor: WAVE ENERGY SYSTEMS, INC., Houston Texas 77056 (US)
(72) Inventor: Boucher, Raymond Marcel Gut, Houston, TX 77056 (US)
(74) Representative: McCall, John Douglas

(56) References cited:
- EP-A- 0 046 375
- EP-A- 0 251 743
- FR-A- 1 508 847
- INTERNATIONAL JOURNAL OF PHARMACEUTICS, vol. 4, 1979, Amsterdam (NL); S.P. GORMAN et al., pp. 57-65
- JOURNAL DE PHARMACIE DE BELGIQUE, vol. 38, no. 2, 1983, Brussels (BE); A. CREMIEUX et al., pp. 101-104

## Description

### BACKGROUND OF THE INVENTION

Although many glutaraldehyde/surfactant solutions have been evaluated for their sporicidal or bactericidal activity, very few such solutions have been thoroughly investigated from the mycobactericidal activity view point. It is well-known that there is no direct relationship between spores and mycobacteria resistances to chemical disinfectants. For example, while under certain conditions phenols and isopropylalcohol can be extremely potent against M. tuberculosis, the same chemicals have always displayed very poor sporicidal activity.

It is also well-known that cells of M. tuberculosis are among the most resistant vegetative microorganisms, and after bacterial endospores, these cells constitute the most severe challenge to chemical germicides. However, until recently, the efficacy of glutaraldehyde solutions to quickly destroy M. tuberculosis on animate or inanimate surfaces has been questioned by several authors. Rubbo et al (J. Appl. Bact., 30:78-87, 1967) were the first to challenge the tuberculocidal efficacy of 2% alkaline glutaraldehyde solutions sold under the CIDEX trade name (Surgikos, a Johnson and Johnson company). A 1971 study by T. Bergan and A. Lysad relates to the antitubercular action of several types of disinfectants using a method adapted from the Kelsey-Sykes test for disinfectants. It was concluded that the 2% glutaraldehyde solution was not adequately effective, growth occurring after the second incremental addition of bacteria. In November 1976, Boucher et al filed a report at the Environmental Protection Agency on a comparative study of the tuberculocidal efficacy of acid and alkaline glutaraldehyde (2%) compositions. These conclusions, based on hundreds of Association of Official Analytical Chemists (AOAC) tests using more than 4000 test tubes conducted at the Ontario Research Foundation, -found-that 2% alkaline glutaraldehyde did not kill M. tuberculosis var bovis (BCG) in 10 or even 20 minutes at 20°C. Although tuberculocidal times seemed to be shorter (15 to 20 min) with a potentiated acid glutaraldehyde at pH 3.5, results were not statistically significant. It was noted that the use of different neutralizers (sodium bisulfite or horse serum) provided different results. Following the identical method, slight variations of temperature between 20°C and 25°C also gave wide variations in tuberculocidal activity.

In November 1976, FM Collins and V. Montalbine reported (Journ Clin Microb, p. 408-412, Nov. 1976) that 2% alkaline glutaraldehyde solution inactivated 10⁵ viable M. tuberculosis H37Rv cells present on the surface of porcelain penicylinders within 3 min. at 18°C. A potentiated acid glutaraldehyde needed five minutes to be tuberculocidal at the same temperature. This method was different from the AOAC procedure (a pass/fail test) and the results were so optimistic that they were skeptically received.

During this period, numerous discrepancies resulting from use of the AOAC method (or procedures derived from it) attracted the attention of many scientists interested in a more accurate methodology. In October 1984, JM Ascenzi, TM Wendt, and JW McDowell in a paper entitled "Important Information Concerning the Reuse of Glutaraldehyde-Based Disinfectants and their Tuberculocidal Activity", first evaluated seven known glutaraldehyde sterilizing compositions with a new quantitative technique said to be very accurate and reproducible. They varied the contact times (1, 2, 5, 10, and 20 minutes) at a standard temperature of 20°C and none of the disinfectants which were tested showed complete kill of the test populations of mycobacteria in ten or twenty minutes. Table I shows the specific data pertaining to this study. This was extremely important since all of these commercial solutions had been previously approved for 10 and 20 minutes tuberculocidal efficacy with the AOAC method. The Environmental Protection Agency (EPA), having regulation authority over label claims of sterilants and disinfectants, convened a panel of experts in September 1985 to evaluate this new quantitative procedure and to compare it with the old AOAC method. Notwithstanding, the EPA decided that all Registrants/Applicants of all antimicrobial pesticides with existing tuberculocidal claims for fresh or reused solutions would have to retest their products with one of the three following options:
(a) The new quantitative method, (b) the old AOAC method but with substantial modification of the exposure time and temperature, (c) the standard AOAC method using 20°C and 10 minutes exposure time in a laboratory other than the one which developed the original data.

The tuberculocidal data call-in-notice was issued on June 13, 1986 and the results were released on February 17, 1989. Only 43 products of a total of 144 satisfied the data requirements of the call-in. Among the glutaraldehyde-based products only 60% satisfied the call-in requirements. Only four companies tested their products with the new and more accurate quantitative method. Vast discrepancies exist in comparing the quantitative method with the old AOAC approach. For instance, at 20°C, a standard alkaline solution (CIDEX 2%) needed 70 min. to kill M. tuberculosis, the CIDEX formula needed 2 hours and the CIDEX Machine 4 hours. Previously, these solutions were claiming a 10 minute kill time at 20°C with the AOAC method (JM Ascenzi et al, Surgikos, Res. Div., Oct. 1984). The influence of temperature is appreciated by the data showing 2% alkaline solution (CIDEX) kills M. tuberculosis in 70 min. at 20°C, in 30 min. at 25°C, and in only 10 min. at 30°C. U.S. Patent No. 3,917,850 shows that a mixture of glutaraldehyde and phenol (or phenate salt) in the presence of anionic compounds could display some mycobactericidal synergism.

The new quantitative procedure of JM Ascenzi, TM Wendt, and JW McDowell appears in the Environmental Protection Agency PR Notice 80-1 of May 28, 1986, Section 2, "Tuberculocidal Efficacy Testing". This utilizes a kill curve concept in which a suspension of approximately 10⁶ colony forming units (CFU) of M. bovis BCG is added to each ml of disinfectant in tubes held at the appropriate temperature.

Aldehydes have a strong odor and their vapors can be very irritating to mucous membranes. To solve this problem researchers have tried to combine aldehydes with various glycols (U.S. Patent No. 3,886,269). Through hydrogen bonding, glycols and aldehydes form physical complexes (i.e., larger molecules) which exhibit a lower vapor pressure and less eye and skin irritation. This method was first suggested by Trujillo and Lindell in a paper entitled, "New Formaldehyde Based Disinfectants" (J. Appl. Microb, 26(1):106-110, July 1973). The same year, Harriet Field of the Queen Mary Veteran's Hospital in Montreal, Canada, reported the elimination of noxious glutaraldehyde vapors using propylene glycol and glycerol. The direct complexing of a glutaraldehyde solution with triethylene-glycol was first reported by Boucher in the summer of 1975. On February 15, 1977, the first odorless commercial glutaraldehyde/triethylene glycol composition was approved by the USDA under the trade name AGROCIDE 2. A concentrate of this formula was later registered by the EPA (February 2, 1979) under the Registration No. 15136-5. Between 1976 and 1977, H.D. Muller of the University of Georgia College of Agriculture released several reports describing the successful replacement of formaldehyde by the Boucher glutaraldehyde/triethylene glycol solutions for poultry hatcheries applications (Evaluation of AGROCIDE in a commercial broiler hatchery, Field Trial II, October 20, 1976 by Harry D. Muller, Ext. Poultry Sci, University of Georgia, Athens, Georgia). The use of these triethylene glycol complexes in hospitals was later mentioned by Boucher in November, 1978 (Respiratory Care 23(11):1063-1072). The glutaraldehyde/triethylene glycol solutions of Boucher and Muller were potentiated with TERGITOL 15-S-12 a non-ionic surfactant. The original formula registered by the USDA in early 1977 has been marketed in this country since 1975 under the trade name AGROCIDE, MC25, WAVICIDE-06, and 05. In all these formulations the amount of deodorizing triethylene glycol (TEG) was six times higher than the concentration of dialdehyde. In other words, a 0.5% glutaraldehyde formula contained 3% TEG while a 0.25% contained 1.5% TEG.

In accordance with the present invention, there is provided the use of a phenol-free liquid composition comprising:
(a) a solvent consisting of water or a lower alkanol;
(b) between about 0.1 to about 16% by weight of a dialdehyde containing from 2 to about 6 carbon atoms;
(c) an odor-reducing agent selected from the group consisting of ethylene glycol, propylene glycol, diethylene glycol, triethylene glycol, polyethylene glycol, polypropylene glycol, and mixtures thereof;
(d) between about 0.02 to about 10 percent by weight of an anionic surfactant having a negatively-charged hydrophilic moiety selected from the group consisting of alkyl sulfates, alkyl sulfonates, alcohol sulfates, alkyl aryl sulfonates, dialkyl sulfosuccinates, and mixtures thereof; and
(e) buffer salts in sufficient amounts to stabilize the pH of the solution inside the range of from about 5.9 to 7.4
   wherein the glycol compounds are present in a ratio of 0.1 to 2.0 as compared to the dialdehyde
   for destroying mycobacteria on an animate or inanimate surface the destruction of mycobacteria on the animate surface being for the purpose of skin cleansing.

This invention relates to the development of a family of glutaraldehyde-based surface disinfectants which are extremely efficacious against mycobacteria. To achieve this goal it was necessary to find chemicals which quickly disrupt the protective lipid-rich cell wall of Mycobacterium tuberculosis and thus allow a faster penetration of the cidal aldehyde radicals which then interact with nucleic acids. It has been discovered that anionic surfactants of the alkyl sulfate, alkyl sulfonate, alcohol sulfate or alkyl aryl sulfonate type fulfill such a need for a quick lipids cell wall destruction in the presence of glutaraldehyde hydrates and monomers. For example, a preferred anionic surfactant such as sodium dodecyl sulfate (SDS) has been shown to be far superior to solubilize lipid - protein complexes in mycobacterial cell walls than the best non-ionic surfactants currently used in today's glutaraldehyde formulae (see US Pat. No. 3,968,248 and 4,436,754). It has also been discovered that adding glycol molecules to deodorize glutaraldehyde solutions (see US Pat. No. 3,886,269) can greatly affect the tuberculocidal activity of glycol/glutaraldehyde mixtures. Mycobactericidal activity appears to be inversely related to the ratio of glycol to aldehydes in a glutaraldehyde formulation.

It is one purpose of the present invention to outline the conditions under which an odorless glutaraldehyde (i.e., complexed with a glycol) could maximize its tuberculocidal activity by adding a suitable anionic surfactant.

It is another purpose of this invention to evaluate tuberculocidal activity of disinfectants using the method approved by the EPA under strict and controlled conditions.

It is another object of this invention to show that glutaraldehyde solutions containing specific anionic surfactants can destroy M. tuberculosis on surfaces faster than non-ionic glutaraldehyde formulations.

It is yet another purpose of this invention to assess the influence of the addition of glycols on mycobactericidal activity of glutaraldehyde-anionic compositions when tested with the EPA quantitative procedure.

Still another object of the present invention is to establish the magnitude of the gain, if any, in tuberculocidal activity when substituting non-ionics with anionics in "ready to use" hospital sterilants containing 0.5% to 5% glutaraldehyde.

As will be more fully described hereafter, we have now found that by replacing non-ionics with anionics such as alkyl sulfonates (ARCTIC SYNTEX A - a trademark of the Colgate Co.), alcohol sulfates (DUPONOL WA - a trademark of the DuPont Co.) and alkyl aryl sulfonates (SANTOMERSE 3 - a trademark of Monsanto, or ALKANOL B - a trademark of the DuPont Co.), this class of surfactant has mycobactericidal superiority when it was added to glutaraldehyde disinfectant solutions.

Another significant discovery herein lies in the fact that adding glycol molecules to deodorize glutaraldehyde greatly affects the tuberculocidal activity of the glycol/aldehydes solution. Table IV shows results from both anionic and non-ionic glutaraldehyde compositions.

### BRIEF DESCRIPTION OF THE DRAWINGS

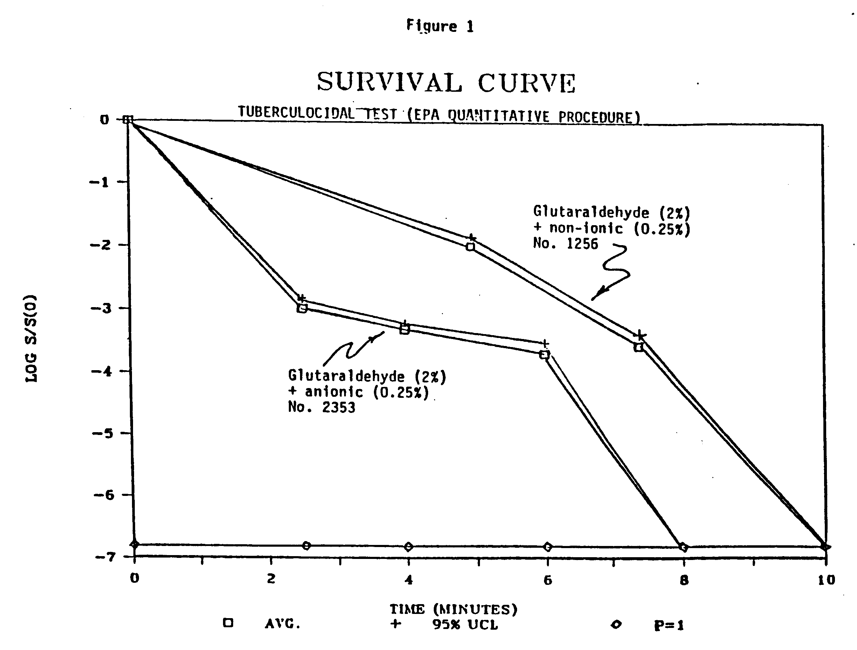

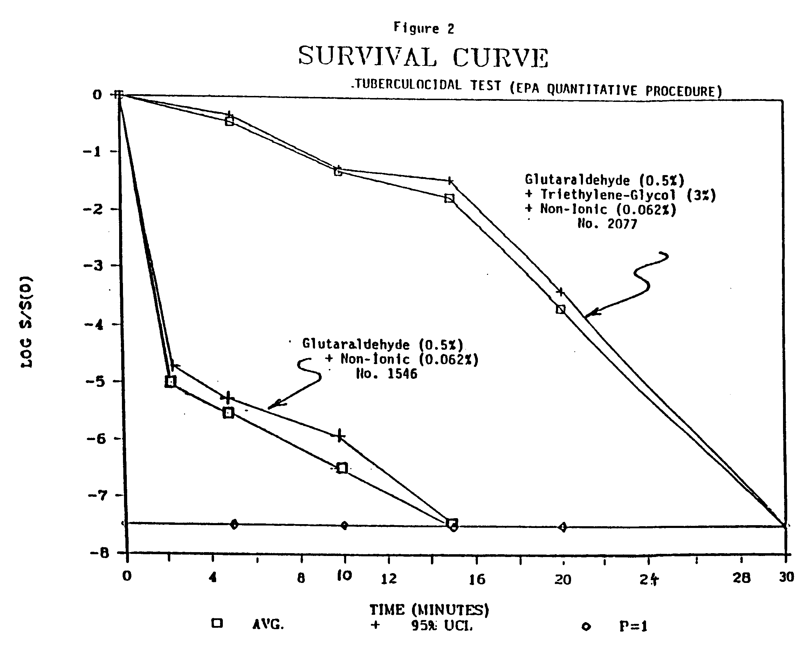

Figures 1 and 2 depict the survival rate, that is the level of activity of the Mycobacteria Tuberculosis organism which is quantitively determined according to the EPA procedures published May 28, 1986. Figure 1 shows the rate of kill of M. bovis (BCG) by two glutaraldehyde formula containing the same amount of active ingredient but with two different types of surfactants. At equal concentrations, the anionic surfactant displays a faster kill rate. Figure 2 shows the different kill rates of formula with and without glycol, but with the same amount of glutaraldehyde and surfactant. A ratio of glycol to aldehydes of six slows down considerably the tuberculocidal activity. Results of user samples of glutaraldehyde-containing solutions with various surfactants, ionic and non-ionic and with a glycol-containing substance are shown. These correspond to the numbered samples listed in Tables II and IV. The times in minutes are shown as maximized at 10′ in Figure 1 and at 30′ in Figure 2. Log S/S(O) relates to the plotted tables of averages of survivors divided by the initial count for each time point measured in minutes.

### DETAILED DESCRIPTION OF THE INVENTION

Electron micrographs of thin sections of M. tuberculosis show a thick wall composed of three layers enclosing a plasma membrane that is also a three layered structure. Chemically, the wall of the mycobacterium is very complex and presents many unique characteristics. The most striking feature is its high lipid content (up to 60% of its dry weight) which accounts for most of the unusual properties of this microorganism: (a) relative impermeability to stains, (b) acid fastness, and (c) unusual resistance to killing by acid or alkali. The backbone of the mycobacterial cell wall is a covalent structure consisting of two polymers covalently linked by phosphodiester bonds, a peptidoglycan and an arabinogalactan. As much as 70 percent of the cross linking in the peptidoglycan consists of interpeptide bridges between molecules of meso-diaminopimelic acid (DPA). A large number of other compounds are also associated with the mycolate-arabinogalactan-peptidoglycan complex. Crude cell wall preparations contain large amounts of amino acids which are said to be present in the wall as lipoproteins or glycolipoproteins. In addition to the glycolipids bound to the peptidoglycan, other lipid substances are present on the cell surface: cord factor (trehalose 6, 6′-dimycolate), sulfatides and mycosides all of which are important from the biological activity viewpoint.

The acid-fastness characteristic of the tubercle bacillus is related to its lipid content. It is believed that the acid-fastness of mycobacteria is based on a lipid-barrier principle, in which an increased hydrophobicity of the surface layers follows the complexing of dye with mycolic acid residues that are present in the cell wall. This prevents exit of carbolfuchsin that has become trapped in the interior of the cell.

It is believed that fast cidal reaction depends on the penetration of aldehydes radicals through the protective cell wall layers.

Anionic compounds are the most likely surface active agents which could help penetrate the lipid barrier and solubilize cell membranes in the form of surfactant-lipid-protein complexes. The surfactant-lipid-protein complexes are further solubilized to provide surfactant-protein complexes and surfactant-lipid complexes. Another advantage of the use of an anionic agent, for instance sodium dodecyl sulfate (SDS), is it strong denaturant activity which dissociates proteins into polypeptide chains. The prior art of the effects of SDS (2% W/V) was conducted by AD Russell, et al, (Int. Symp. Resist Microorg. to Disinfectants, Oct, 1973, Poznan, Poland) which showed that at 35°C whole cells and cell walls of E. coli were disintegrated in a few minutes due to the extraction of lipoproteins from the walls. Pre-treatment of cells and walls of E. coli with glutaraldehyde greatly reduced subsequent SDS lysis and the protective effect of glutaraldehyde was greater with cells than with cell walls. No data appears with a mixture of glutaraldehyde with SDS to assess the influence of such a binary composition.

It is believed that the presence of SDS in a glutaraldehyde solution will facilitate the destruction of the protective lipid layers and, therefore, will allow a faster penetration and reaction of the cidal glutaraldehyde monomers. The main cidal agents in glutaraldehyde solutions seem to be the end aldehydes of the glutaraldehyde monomers. Apparently, these aldehydes react at different levels in the mycobacteria. Since glutaraldehyde is an alkylating agent it may react chemically with sulfhydryl, hydroxyl, amino and carboxyl groups of proteins (Hoffman RK, Inhibition and Destruction of the Microbial Cell, Acad Press, London/New York, pp. 225-258, 1941). Glutaraldehyde has also been shown to react with amino groups in nucleic acids where it produces alterations in the arrangement of the DNA and subsequently alters protein synthesis (Sangar et al, Journal of Gen. Virology, 21: 399-406, 1973). Although the peptidoglycan of mycobacteria is not identical to the peptidoglycan chain of B. subtilis spores, (Hughes RC and Thurman PF, Biochem J, 119: p. 925, 1970) approximately 30 to 50% of the available-NH₂ groups in isolated B. subtilis spore coats can react with glutaraldehyde thus promoting chain cross-linking. There are many potential sites in a mycobacterium for dialdehydes reaction. However, for fast inactivation of M. tuberculosis, one needs a quick solubilization of the multilayer lipid wall allowing penetration of cidal entities to critical sites. To achieve this solubilization it is well known that one cannot use cationic surfactants (BD Davis, Microbiology, Mycobacteria, Chapter 37, P. 727, Harper and Row, New York, 1980 ed). Non-ionic surfactants of the polyoxyethylene type such as TRITON X-100 (a trademark of the Rohm and Haas Company) and TERGITOL¹ 15-S-12 have been used in the past but with limited success.
¹Tergitol is a trademark of the Union Carbide Chemical Company for non-ionic, biodegradable intermediates comprising ethoxylates and ethoxylates of linear secondary alcohols. The formula for 15-S-12 appears on page 14.

We have now found that the complexing of triethylene glycol, when tested at any amounts six times higher than the glutaraldehyde concentration, results in a substantial decrease in tuberculocidal activity. The survival curves shown hereafter show that by using glutaraldehyde solutions containing some glycol "lag time" appears (around 15 minutes) before a substantial mycobactericidal kill is observed. It is believed that triethylene-glycol molecules may first combine with aldehyde monomers to form physical complexes. This initial step (during the first fifteen minutes) decreases the number of active aldehydes available to diffuse and react at critical sites with the microorganisms. The formation of larger molecular complexes may slow down the penetration of aldehyde monomers through the lipid barrier. To reduce the slowdown in cidal activity due to the presence of glycol complexes, the glycol concentration in the glutaraldehyde formula could be decreased. Key components of the present invention include deodorizing, as well as decreasing mucous membrane irritation and potential metals corrosion. As seen from the data in Table V, a compromise was necessary to achieve high tuberculocidal activity in an odorless solution. Two solutions with a low glutaraldehyde content (0.5%) and with the same amount (0.0625%) of surfactant are evaluated. Only the ratio of glycol to glutaraldehyde varied (G/A) from 0 to 6. In both cases, the mycobactericidal efficacy of the solutions rapidly decrease when the G/A ratio is greater than 2. As expected, in the region (G/A ≅ 1.2) where tuberculocidal activity is maximum, the glutaraldehyde/anionic formulation is superior to the glutaraldehyde/non-ionic composition. Low glutaraldehyde concentrations (below 0.5% W/V) do not create serious odor or corrosion problems. In determining the absence of odor, trained laboratory personnel with normal olfactory senses rated and observed the atmosphere and environment in a 60 cubic meter room containing an open, flat container with one gallon of product. This closed room had no ventilation. The solution remained at least 24 hours in the flat glass container. The 0.5% glutaraldehyde/surfactant solution shows a mean primary irritation score of 0.33, which is one of the lowest ratings defined as "minimally irritating". Even the more sensitive rabbit eye tests shows that 0.5% glutaraldehyde is at the threshold for induction of inflammatory effects. One achieves high tuberculocidal efficacy (i.e., less than 10 min. at 20°C), little odor, and practically no corrosion by using an aqueous glutaraldehyde (0.5%) anionic (0.062%) formulation. However, other needs such as sporicidal activity require higher concentration of glutaraldehyde. The best odorless composition incorporates a glycol with a G/A ratio smaller than two. The lower the G/A ratio, the greater the mycobactericidal activity.

### EXAMPLES

All the tests described in the present application were conducted at 20°C, the temperature recommended in the old AOAC method. After exposure of the bacteria to the test disinfectant for varying time intervals, aliquots of the disinfectant are removed and added to an equivalent volume of a neutralizing solution (in our studies it was 0.5% sodium metabisulfite). Each tube of neutralized disinfectant containing mycobacteria is then diluted. Counts of viable bacteria are made from each dilution using a membrane filter (0.45 microns pore size) technique. Membrane filters with mycobacteria are placed on Mycobacteria 7H11 agar. Each disinfectant is plated in quintuplicate. Incubation takes place at 37°C for 21 days. Colonies growing up on membranes are then counted under a high power optical microscope. All the data are set up in tables of averages and plotted as average survivors divided by initial count (S/So) for each time point. The plots are made on semi-log paper for easier interpretation and comparisons.

To eliminate the influence of pH, all solutions are buffered in the 6 to 7.4 range and preferably at between 5.90 to 6.32 with a mixture of monobasic potassium phosphate and anhydrous dibasic sodium phosphate. The active ingredient is the glutaraldehyde monomer which is in equilibrium with reversible polymers (R.M.G. Boucher, Proc West Pharmacol. Soc. 16:282-288, 1973) when operating in the acid range. The glutaraldehyde content is given in the first column and varied from 0 to 2% (W/V). The glutaraldehyde is assayed using the hydroxylamine hydrochloride method (Union Carbide, BB-TL-2003, 1986).

Two types of surfactants are shown: non-ionic and anionic. These two types of surface active agents are widely used in disinfectant formula due to their specific actions on key components of microorganisms (proteins, enzymes, and membranes). In the case of proteins, non-ionic surfactants show either no interaction or extremely weak interactions, while anionics show intense interaction with proteins and polymers. Usually, anionics solubilize the protective lipid layers of mycobacteria which would not be affected by non-ionics. Non-ionic surfactants generally do not inactivate or denaturate enzymes, while anionics would be expected to affect enzyme activity.

As a typical non-ionic surfactant, TERGITOL 15-S-12 which has been successfully used in acid glutaraldehyde sterilant formula (U.S. Patent No. 3,968,248) under the trade names SONACIDE, WAVICIDE, STERALL, and BANICIDE is evaluated. It is an ethoxylate of isomeric linear alcohols whose structural formula can be written as follows: 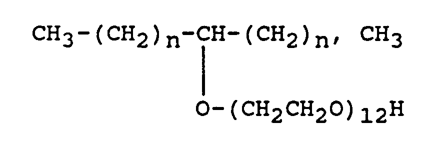
Where (n + n,) = 8-12
The total number of carbon atoms on the hydrophobic portion of the molecule is in the 11 to 15 range. This compound is very stable and it is widely used in industry to promote bleaching, dyeing, finishing, solvent scouring, etc. Due to its low foam characteristics and wetting properties, this surfactant has been used in many dishwasher cleaning liquids.

As a typical anionic surfactant, we use the molecule of sodium dodecyl sulfate (SDS) which is negatively charged. The structural molecular formula can be written as follows: 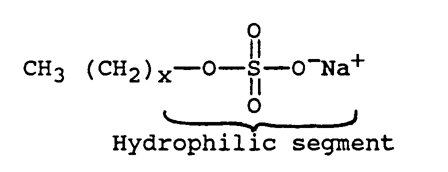
with x=11
Sodium dodecyl sulfate has often been used in the past as an additive in phenolic-based disinfectant formula. The amount of surfactant added in our glutaraldehyde solutions is always computed on the basis of one to eight because it is the ratio successfully used in commercial sterilants of the WAVICIDE type. In other words, a 2% glutaraldehyde solution will contain 0.25% (W/V) anionic or non-ionic surfactant, while a 0.5% glutaraldehyde will contain 0.062% surfactant. The same rule applied for the glycol/glutaraldehyde solutions evaluated in Table IV.

The percentage of surfactant is indicated between parenthesis in the composition column when non-ionic or anionic surfactants are tested in the absence of glutaraldehyde. To cover the influence of aging on the various glutaraldehyde solutions, some tests are also conducted with compositions as old as eleven months.

In Table II, the mycobacteria survival curves for samples 1144 and 1143 showed very little difference. This suggests that the non-ionic surfactant does not contribute greatly to the penetration of the reactive cidal aldehydes. However, all other things being equal, if one replaces the non-ionic with an anionic surfactant, the M. bovis (BCG) kill time is always shorter. It is reduced by 33% with a 0.5% (W/V) glutaraldehyde formula and by 20% when experimenting the 2% (W/V) concentrate (see Figure 1). Aqueous non-ionic glutaraldehyde formula (i.e., without glycol) gives the same results (a 15 minute kill time at 20°C) for a two or eleven month old solutions. As expected, when acting alone, surfactants exhibited no tuberculocidal action at the concentration used in our experiments. The same increase in cidal activity was previously observed (see R. Boucher, U.S. Patent Appl. No. 07/286,738, December 20, 1988) when replacing non-ionics by anionics in virucidal glutaraldehyde formulations. Table III shows, for instance, the data pertaining to a lipophilic virus such as Herpes Simplex and to a more resistant Coxsackie virus B6. Although there is some similarity in the virucidal and mycobactericidal behavior of surfactant/glutaraldehyde formula, it is impossible to predict mycobactericidal efficacy from data collected with viruses. The resistance of M. tuberculosis to disinfectants is several orders of magnitude higher than that observed with Coxsackie virus. The percentage of glycol is indicated between parentheses in the composition column of Tables II and IV when triethylene glycol is tested in the absence of glutaraldehyde. To cover the influence of aging on the various glutaraldehyde/glycol formula, some tests were conducted with compositions as old as 14 months. All the tests in Table IV were performed at 20°C with the EPA quantitative method. All tests were conducted with solutions buffered in the 6. to 6.3 pH range.

Data in Table II show that the presence or absence of non-ionic surfactants does not seem to influence the tuberculocidal efficacy of aqueous glutaraldehyde solutions. The same phenomenon was observed with glycol/glutaraldehyde compositions (samples 0215 and 1784). However, contrary to results obtained with aqueous glycolless solutions, the presence of anionics (1403 and 1417) did not increase the tuberculocidal efficacy under these conditions.

Mycobactericidal activity of nine month old samples (0217) was comparable to that of two month old solutions (1403 and 1417). However, as expected, 14 month old samples showed a strong yellowing of the solution and took a longer time (40 min.) to kill M. tuberculosis. Tests were also conducted with sample 2077, which contained the same amount of glutaraldehyde and non-ionics as the glycolless samples 1144 and 1546. As can be seen from the survival curve (Figure 2), the presence of triethylene glycol doubled the tuberculocidal time. Similar tests with anionic solutions containing the same 0.5% glutaraldehyde content (1145 and 2355) increased the tuberculocidal time from 10 to 30 minutes in the presence of glycol.

In the prior art, meaningful increases in cidal activity were only observed with large amounts of phenols (at least 1.7%) in the presence of 2.5% glutaraldehyde. Such a large concentration of phenol not only causes a strong odor, but also increases the glutaraldehyde odor due to increasing the glutaraldehyde vaporization (see U.S. Patent No. 4,436,754). The influence of phenol on the present glutaraldehyde-glycol formula containing two different surfactants are assessed in test samples No. 2078 and 2079 in Table IV which show an entirely negative influence of the phenol under our experimental conditions.

The manufacture of mycobactericidal solutions containing the three following chemicals: aqueous glutaraldehyde, triethylene glycol (TEG) and sodium dodecylsulfate (SDS) is extremely easy since both TEG and SDS dissolve in a matter of minutes into an aqueous solution of acid glutaraldehyde under mild agitating conditions at room temperature. Other substances may be added to the novel tuberculocidal compositions object of the present invention provided they have no detrimental effect on the mycobactericidal activity of the solutions. For instance, small amounts of ethylenediaminetetraacetic (EDTA) salts or lysozyme could be added to accelerate destabilization of the lipid and peptidoglycan protective layers. Other salts such as sodium gluconate could also be added to neutralize calcium precipitation during formula dilution with hard water. Anti-foaming agents such as organic silicone compounds, anticorrosive agents such as sodium nitrite, dyes or fragrances to improve commercial appeal could also be added as long as they do not adversely affect the cidal mechanisms.

For instance, knowing the excellent mycobactericidal characteristics of alcoholic solutions, lower alkanols such as methanol, ethanol, isopropanol, and the like could be used as the solvent rather than filtered deionized water. A mixture of both could also be used. These minor modifications in the composition of the solvent will be dictated by the nature of the applications: decontamination of instruments, inanimate or animate surfaces, skin degerming, wound cleaning, etc.

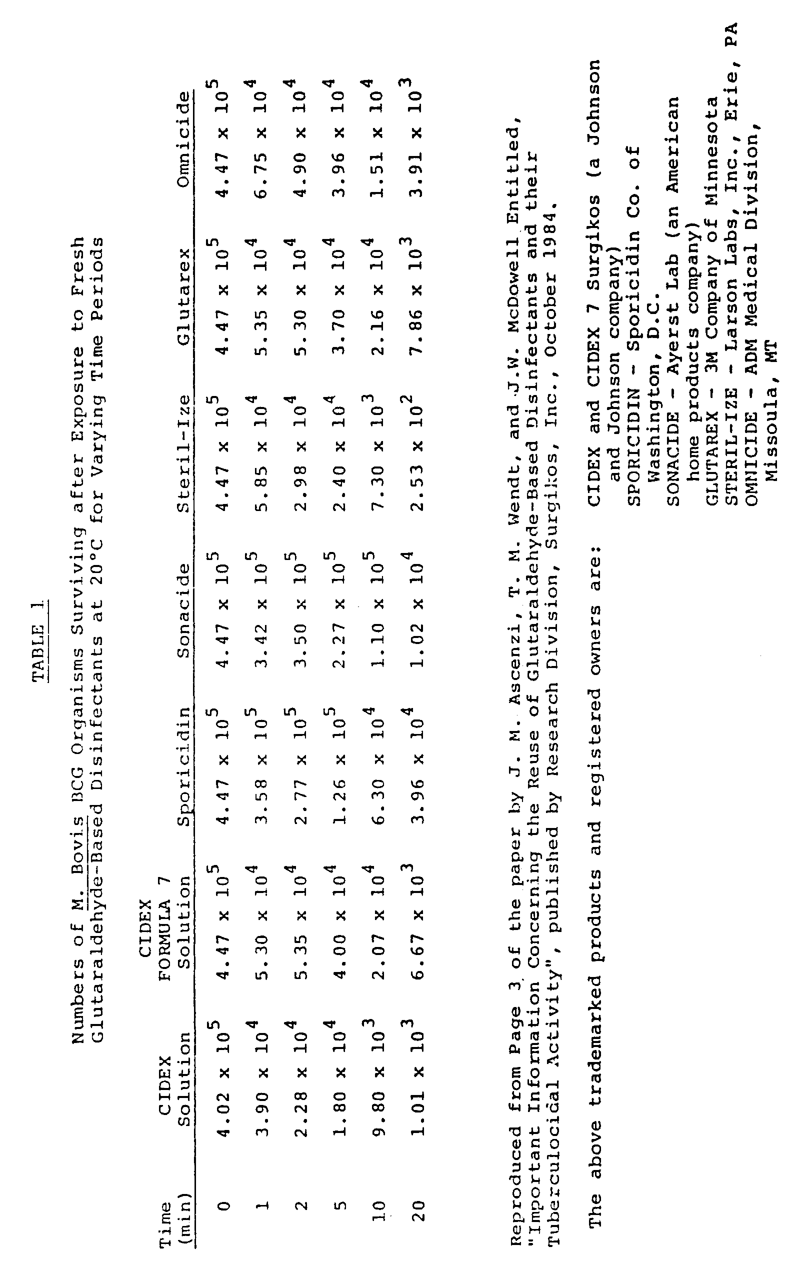

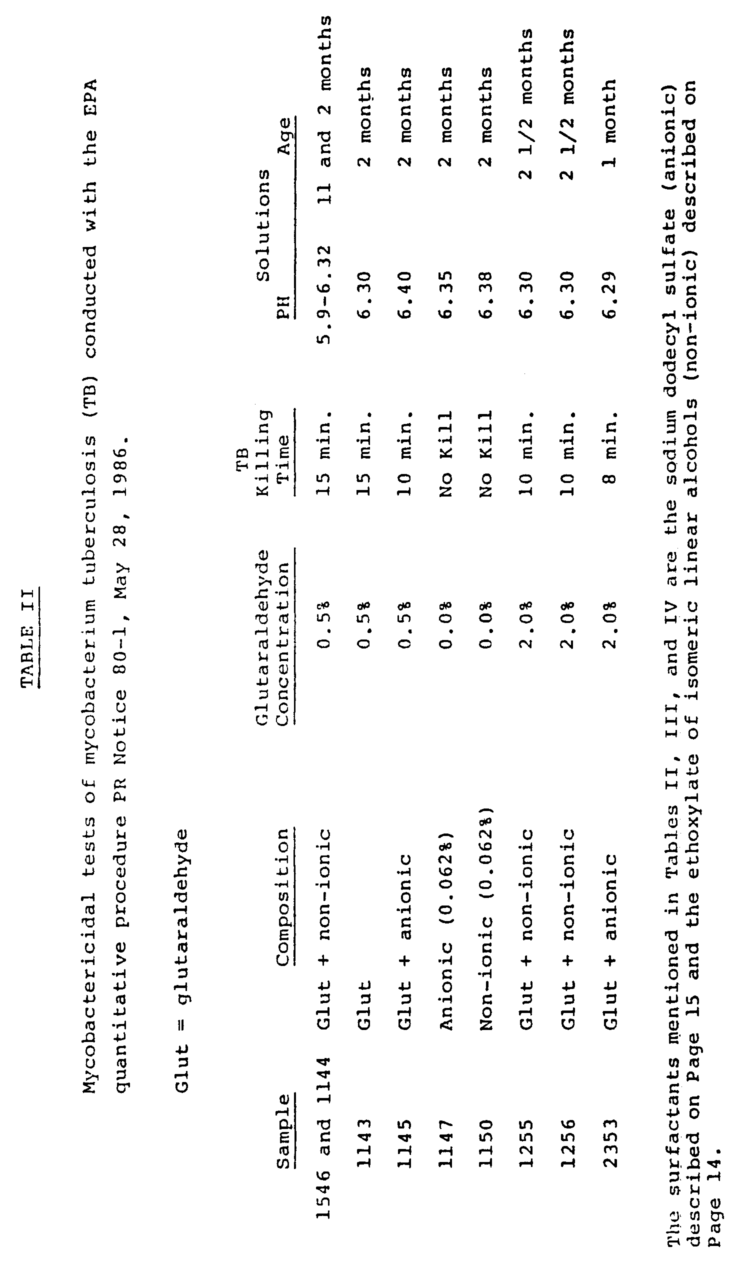

**TABLE III**

| Inactivation Study* of Two Viruses with Surfactant/Glutaraldehyde Formula | | |
|---|---|---|
| | % Viral Activity Remaining after 10 Minutes Exposure | Type of Virus Tested |
| Glutaraldehyde (0.006%) + non-ionic (0.05%) | 100% | Coxsackie Virus B6 (CBV) |
| Glutaraldehyde (0.006%) + anionic (0.05%) | 40% | Coxsackie Virus B6 (CBV) |
| Glutaraldehyde (0.0025%) + non-ionic (0.0005%) | 50% | Herpes Simplex Virus Type I (HSV) |
| Glutaraldehyde (0.0025%) + anionic (0.0005%) | 32% | Herpes Simplex Virus Type I (HSV) |

| | | |
|---|---|---|
| *Virucidal tests conducted according to EPA notice DIS/TSS-7, November 12, 1981 | | |

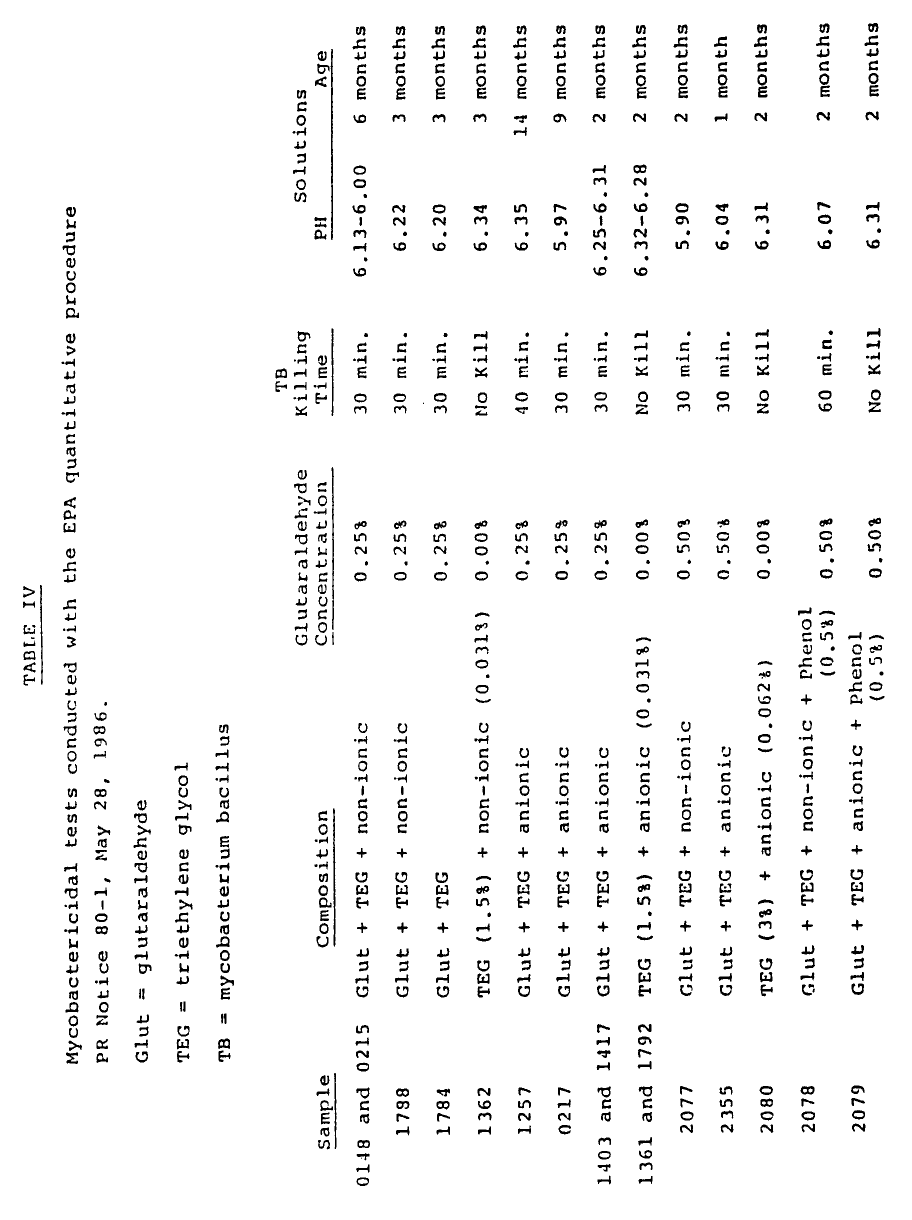

**TABLE V**

| INFLUENCE OF GLYCOL/ALDEHYDE RATIO (G/A) ON MYCOBACTERICIDAL ACTIVITY OF MYCOBACTERIUM TUBERCULOSIS (TB) (a) Glutaraldehyde (0.5%) + anionic (0.0625%) solution. | | | | | | | | |
|---|---|---|---|---|---|---|---|---|
| G/A | 0 | 0.1 | 0.25 | 0.75 | 1 | 1.2 | 2 | 6 |
| Triethylene Glycol Percent (W/V) | None | 0.05 | 0.125 | 0.375 | 0.5 | 0.6 | 1 | 3 |
| Odor Control* | - | + | + | + | + | + | + | + |
| TB Killing Time in Min. | 10 | 10 | 15 | 15 | 20 | 20 to 30 | 30 to 40 | 30 to 40 |

| (b) Glutaraldehyde (0.5%) + non-ionic (0.0625%) solution. | | | | | | | | |
|---|---|---|---|---|---|---|---|---|
| G/A | 0 | 0.1 | 0.25 | 0.75 | 1 | 1.2 | 2 | 6 |
| Triethylene Glycol Percent (W/V) | None | 0.05 | 0.125 | 0.375 | 0.5 | 0.6 | 1 | 3 |
| Odor Control* | - | + | + | + | + | + | + | + |
| TB Killing Time in Min. | 15 | 15 | 20 | 20 | 30 | 30 to 40 | 30 to 40 | 30 to 40 |

| | | | | | | | | |
|---|---|---|---|---|---|---|---|---|
| *A 0.5% glutaraldehyde level is the threshold for odor control. | | | | | | | | |

## Claims (Claims for the following Contracting State(s): AT, BE, CH, DE, FR, GB, GR, IT, LI, LU, NL, SE)

1. The use of a phenol-free liquid composition comprising:
(a) a solvent consisting of water or a lower alkanol;
(b) between about 0.1 to about 16% by weight of a dialdehyde containing from 2 to about 6 carbon atoms;
(c) an odor-reducing agent selected from the group consisting of ethylene glycol, propylene glycol, diethylene glycol, triethylene glycol, polyethylene glycol, polypropylene glycol, and mixtures thereof;
(d) between about 0.02 to about 10 percent by weight of an anionic surfactant having a negatively-charged hydrophilic moiety selected from the group consisting of alkyl sulfates, alkyl sulfonates, alcohol sulfates, alkyl aryl sulfonates, dialkyl sulfosuccinates, and mixtures thereof; and
(e) buffer salts in sufficient amounts to stabilize the pH of the solution inside the range of from about 5.9 to 7.4
wherein the glycol compounds are present in a ratio of 0.1 to 2.0 as compared to the dialdehyde
for destroying mycobacteria on an animate or inanimate surface the destruction of mycobacteria on the animate surface being for the purpose of skin cleansing.

2. The use of a composition as claimed in Claim 1, wherein said dialdehyde is glutaraldehyde.

3. The use of a composition as claimed in Claims 1 or 2, wherein said odor-reducing agent is triethylene glycol.

4. The use of a composition as claimed in any one of Claims 1 to 3, wherein said anionic surfactant is sodium dodecylsulfate.

5. The use of a composition as claimed in any one of Claims 1 to 4, wherein the buffer salt is selected from the group consisting of alkali metal carbonates, bicarbonates, phosphates and borates, organic carboxylate sales, and mixtures thereof.

6. The use of a composition as claimed in any one of claims 1 to 5, wherein said composition has a pH range of from 5.9 to about 6.32 effected by a mixture of monobasic potassium or sodium phosphate and anhydrous dibasic sodium phosphate.

7. The use of a composition as claimed in any one of claims 1 to 6, which comprises applying said composition to an inanimate surface contaminated by mycobacteria.

8. The use of a composition as claimed in any one of claims 1 to 6, which comprises destroying mycobacteria by scrubbing contaminated skin with said composition.

9. The use of a composition as claimed in any one of claims 1 to 8, wherein the mycobacteria is M. tuberculosis.

10. The use of a composition as claimed in any one of claims 1 to 9, wherein said composition comprises between about 0.25% to about 2% glutaraldehyde, about 0.031% to about 0.25% anionic surfactant and a glycol to glutaraldehyde ratio smaller than two.

## Claims (Claims for the following Contracting State(s): ES)

1. The use of a phenol-free liquid composition comprising:
(a) a solvent consisting of water or a lower alkanol;
(b) between about 0.1 to about 16% by weight of a dialdehyde containing from 2 to about 6 carbon atoms;
(c) an odor-reducing agent selected from the group consisting of ethylene glycol, propylene glycol, diethylene glycol, triethylene glycol, polyethylene glycol, polypropylene glycol, and mixtures thereof;
(d) between about 0.02 to about 10 percent by weight of an anionic surfactant having a negatively-charged hydrophilic moiety selected from the group consisting of alkyl sulfates, alkyl sulfonates, alcohol sulfates, alkyl aryl sulfonates, dialkyl sulfosuccinates, and mixtures thereof; and
(e) buffer salts in sufficient amounts to stabilize the pH of the solution inside the range of from about 5.9 to 7.4
wherein the glycol compounds are present in a ratio of 0.1 to 2.0 as compared to the dialdehyde
for destroying mycobacteria on an animate or inanimate surface the destruction of mycobacteria on the animate surface being for the purpose of skin cleansing.

2. The use of a composition as claimed in Claim 1, wherein said dialdehyde is glutaraldehyde.

3. The use of a composition as claimed in Claims 1 or 2, wherein said odor-reducing agent is triethylene glycol.

4. The use of a composition as claimed in any one of Claims 1 to 3, wherein said anionic surfactant is sodium dodecylsulfate.

5. The use of a composition as claimed in any one of Claims 1 to 4, wherein the buffer salt is selected from the group consisting of alkali metal carbonates, bicarbonates, phosphates and borates, organic carboxylate salts, and mixtures thereof.

6. The use of a composition as claimed in any one of claims 1 to 5, wherein said composition has a pH range of from 5.9 to about 6.32 effected by a mixture of monobasic potassium or sodium phosphate and anhydrous dibasic sodium phosphate.

7. The use of a composition as claimed in any one of claims 1 to 6, which comprises applying said composition to an inanimate surface contaminated by mycobacteria.

8. The use of a composition as claimed in any one of claims 1 to 6, which comprises destroying mycobacteria by scrubbing contaminated skin with said composition.

9. The use of a composition as claimed in any one of claims 1 to 8, wherein the mycobacteria is M. tuberculosis.

10. The use of a composition as claimed in any one of claims 1 to 9, wherein said composition comprises between about 0.25% to about 2% glutaraldehyde, about 0.031% to about 0.25% anionic surfactant and a glycol to glutaraldehyde ratio smaller than two.

11. The use of a composition as claimed in any of the preceding claims for destroying mycobacteria on an inanimate surface.

12. A method of manufacturing a phenol-free liquid composition as described in any of claims 1 to 6 or 10 in which the components (c), (d) and (e) are dissolved into a solution of (a) and (b) under mild agitating conditions at room temperature.

## Patentansprüche (Patentansprüche für folgende(n) Vertragsstaat(en): AT, BE, CH, DE, FR, GB, GR, IT, LI, LU, NL, SE)

1. Verwendung einer phenolfreien flüssigen Zusammensetzung, die folgendes umfaßt:
(a) Ein Lösungsmittel, das aus Wasser oder einem niederen Alkanol besteht;
(b) zwischen circa 0,1 bis circa 16 Gew.-% eines Dialdehyds, der von 2 bis circa 6 Kohlenstoffatome enthält;
(c) ein geruchsreduzierendes Mittel, das unter der Gruppe ausgewählt wird, die aus Ethylenglycol, Propylenglycol, Diethylenglycol, Triethylenglycol, Polyethylenglycol, Polypropylenglycol und Gemischen davon besteht;
(d) zwischen circa 0,02 bis circa 10 Gew.-% eines anionischen Tensids mit einem negativ geladenen hydrophilen Anteil, der unter der Gruppe ausgewählt wird, die aus Alkylsulfaten, Alkylsulfonaten, Alkoholsulfaten, Alkylarylsulfonaten, Dialkylsulfosuccinaten und Gemischen davon besteht und
(e) Puffersalze in ausreichenden Mengen zum Stabilisieren des pH-Wertes der Lösung innerhalb des Bereichs von circa 5,9 bis 7,4,
worin die Glycolverbindungen im Vergleich zum Dialdehyd in einem Verhältnis von 0,1 bis 2,0 vorliegen,
zum Vernichten von Mycobakterien auf einer lebenden oder nicht lebenden Oberfläche, wobei die Vernichtung von Mycobakterien auf der lebenden Oberfläche dem Zweck der Hautreinigung dient.

2. Verwendung einer Zusammensetzung nach Anspruch 1, worin genanntes Dialdehyd Glutaraldehyd ist.

3. Verwendung einer Zusammensetzung nach Ansprüchen 1 oder 2, worin genanntes geruchsreduzierendes Mittel Triethylenglycol ist.

4. Verwendung einer Zusammensetzung nach einem der Ansprüche 1 bis 3, worin genanntes anionisches Tensid Natriumdodecylsulfat ist.

5. Verwendung einer Zusammensetzung nach einem der Ansprüche 1 bis 4, worin das Puffersalz unter der Gruppe ausgewählt wird, die aus Alkalimetallcarbonaten, -bicarbonaten, -phosphaten und -boraten, organischen Carboxylatsalzen und Gemischen davon besteht.

6. Verwendung einer Zusammensetzung nach einem der Ansprüche 1 bis 5, worin genannte Zusammensetzung einen pH-Bereich von 5,9 bis circa 6,32 hat, der durch ein Gemisch von Monokalium- oder Mononatriumdihydrogenphosphat und wasserfreiem Dinatriumhydrogenphosphat bewirkt wird.

7. Verwendung einer Zusammensetzung nach einem der Ansprüche 1 bis 6, welche die Applikation genannter Zusammensetzung auf eine nicht lebende Oberfläche umfaßt, die durch Mycobakterien kontaminiert ist.

8. Verwendung einer Zusammensetzung nach einem der Ansprüche 1 bis 6, welche das Vernichten von Mycobakterien durch Reinigen der kontaminierten Haut mit genannter Zusammensetzung umfaßt.

9. Verwendung einer Zusammensetzung nach einem der Ansprüche 1 bis 8, worin das Mycobacterium M. tuberculosis ist.

10. Verwendung einer Zusammensetzung nach einem der Ansprüche 1 bis 9, worin genannte Zusammensetzung zwischen circa 0,25% und circa 2% Glutaraldehyd, circa 0,031% und circa 0,25% anionisches Tensid und ein Verhältnis von Glycol zu Glutaraldehyd kleiner als zwei umfaßt.

## Patentansprüche (Patentansprüche für folgende(n) Vertragsstaat(en): ES)

1. Verwendung einer phenolfreien flüssigen Zusammensetzung, die folgendes umfaßt:
(a) Ein Lösungsmittel, das aus Wasser oder einem niederen Alkanol besteht;
(b) zwischen circa 0,1 bis circa 16 Gew.-% eines Dialdehyds, der von 2 bis circa 6 Kohlenstoffatome enthält;
(c) ein geruchsreduzierendes Mittel, das unter der Gruppe ausgewählt wird, die aus Ethylenglycol, Propylenglycol, Diethylenglycol, Triethylenglycol, Polyethylenglycol, Polypropylenglycol und Gemischen davon besteht;
(d) zwischen circa 0,02 bis circa 10 Gew.-% eines anionischen Tensids mit einem negativ geladenen hydrophilen Anteil, der unter der Gruppe ausgewählt wird, die aus Alkylsulfaten, Alkylsulfonaten, Alkoholsulfaten, Alkylarylsulfonaten, Dialkylsulfosuccinaten und Gemischen davon besteht und
(e) Puffersalze in ausreichenden Mengen zum Stabilisieren des pH-Wertes der Lösung innerhalb des Bereichs von circa 5,9 bis 7,4,
worin die Glycolverbindungen im Vergleich zum Dialdehyd in einem Verhältnis von 0,1 bis 2,0 vorliegen,
um Vernichten von Mycobakterien auf einer lebenden oder nicht lebenden Oberfläche, wobei die Vernichtung von Mycobakterien auf der lebenden Oberfläche dem Zweck der Hautreinigung dient.

2. Verwendung einer Zusammensetzung nach Anspruch 1, worin genanntes Dialdehyd Glutaraldehyd ist.

3. Verwendung einer Zusammensetzung nach Ansprüchen 1 oder 2, worin genanntes geruchsreduzierendes Mittel Triethylenglycol ist.

4. Verwendung einer Zusammensetzung nach einem der Ansprüche 1 bis 3, worin genanntes anionisches Tensid Natriumdodecylsulfat ist.

5. Verwendung einer Zusammensetzung nach einem der Ansprüche 1 bis 4, worin das Puffersalz unter der Gruppe ausgewählt wird, die aus Alkalimetallcarbonaten, -bicarbonaten, -phosphaten und -boraten, organischen Carboxylatsalzen und Gemischen davon besteht.

6. Verwendung einer Zusammensetzung nach einem der Ansprüche 1 bis 5, worin genannte Zusammensetzung einen pH-Bereich von 5,9 bis circa 6,32 hat, der durch ein Gemisch von Monokalium- oder Mononatriumdihydrogenphosphat und wasserfreiem Dinatriumhydrogenphosphat bewirkt wird.

7. Verwendung einer Zusammensetzung nach einem der Ansprüche 1 bis 6, welche die Applikation genannter Zusammensetzung auf eine nicht lebende Oberfläche umfaßt, die durch Mycobakterien kontaminiert ist.

8. Verwendung einer Zusammensetzung nach einem der Ansprüche 1 bis 6, welche das Vernichten von Mycobakterien durch Reinigen der kontaminierten Haut mit genannter Zusammensetzung umfaßt.

9. Verwendung einer Zusammensetzung nach einem der Ansprüche 1 bis 8, worin das Mycobacterium M. tuberculosis ist.

10. Verwendung einer Zusammensetzung nach einem der Ansprüche 1 bis 9, worin genannte Zusammensetzung zwischen circa 0,25% und circa 2% Glutaraldehyd, circa 0,031% und circa 0,25% anionisches Tensid und ein Verhältnis von Glycol zu Glutaraldehyd kleiner als zwei umfaßt.

11. Verwendung einer Zusammensetzung nach einem der vorangehenden Ansprüche zum Vernichten von Mycobakterien auf einer nicht lebenden Oberfläche.

12. Verfahren zur Herstellung einer phenolfreien flüssigen Zusammensetzung nach einem der Ansprüche 1 bis 6 oder 10, worin die Bestandteile (c), (d) und (e) in einer Lösung von (a) und (b) unter schonenden Rührbedingungen bei Raumtemperatur aufgelöst werden.

## Revendications (Revendications pour l'(les) Etat(s) contractant(s) suivant(s): AT, BE, CH, DE, FR, GB, GR, IT, LI, LU, NL, SE)

1. Utilisation d'une composition liquide sans phénol comprenant:
(a) un solvant consistant en eau ou en alcane inférieur;
(b) entre environ 0,1 et environ 16 % en poids d'un dialdéhyde qui contient de 2 à environ 6 atomes de carbone ;
(c) un agent réducteur d'odeur sélectionné à partir du groupe consistant en éthylène glycol propylène glycol, diéthylène glycol, triéthylène glycol, polyéthylène glycol, polypropylène glycol et en mélanges de ceux-ci;
(d) entre environ 0,02 et environ 10 pour cent en poids d'un surfactant anionique ayant une fraction hydrophile à charge négative sélectionnée à partir du groupe consistant en sulfates d'alkyle, sulfonates d'alkyle, sulfates d'alcool, sulfonates d'aryle alkyle, sulfosuccinates de dialkyle, et en mélanges de ceux-ci; et
(e) des sels tampon en quantités suffisantes pour stabiliser le pH de la solution dans des limites comprises entre environ 5,9 et 7,4 dans laquelle les composés de glycol sont présents dans une proportion comprise entre 0,1 et 2,0 par rapport au dialdéhyde,
afin de détruire les mycobactéries sur une surface animée ou inanimée, la destruction des mycobactéries sur la surface animée ayant pour objet de nettoyer la peau.

2. Utilisation d'une composition, selon la revendication 1, dans laquelle ledit dialdéhyde est du glutaraldéhyde.

3. Utilisation d'une composition, selon les revendications 1 ou 2, dans laquelle l'agent de réduction de l'odeur est du triéthyléne glycol.

4. Utilisation d'une composition, selon l'une quelconque des revendications de 1 à 3, dans laquelle ledit surfactant anionique est du dodécylsulfate de sodium.

5. Utilisation d'une composition, selon l'une quelconque des revendications de 1 à 4, dans laquelle le sel tampon est sélectionné à partir du groupe consistant en carbonates, bicarbonates, phosphates et borates de métaux alcalins, en carboxylates de sels organiques, et en mélanges de ceux-ci.

6. Utilisation d'une composition, selon une quelconque des revendications de 1 à 5, dans laquelle le pH de ladite composition est compris entre 5,9 et environ 6,32, obtenu par le mélange de potassium monobasique ou de phosphate de sodium et de phosphate de sodium dibasique anhydre.

7. Utilisation d'une composition, selon l'une quelconque des revendications de 1 à 6, qui comprend l'application de ladite composition à une surface inanimée contaminée par des mycobactéries.

8. Utilisation d'une composition, selon l'une quelconque des revendications de 1 à 6, qui comprend la destruction des mycobactéries en frottant la peau contaminée avec ladite composition.

9. Utilisation d'une composition, selon l'une quelconque des revendications de 1 à 8, dans laquelle le mycobacterium est le M.tuberculosis.

10. Utilisation d'une composition, selon une quelconque des revendications de 1 à 9, dans laquelle ladite composition comprend entre environ 0,25 % et environ 2 % de glutaraldéhyde, entre environ 0,031 % et environ 0,25 % de surfactant anionique et une proportion glycol: glutaraldéhyde inférieure à deux.

## Revendications (Revendications pour l'(les) Etat(s) contractant(s) suivant(s): ES)

1. Utilisation d'une composition liquide sans phénol comprenant:
(a) un solvant consistant en eau ou en alcane inférieur;
(b) entre environ 0,1 et 16 % en poids d'un dialdéhyde qui contient de 2 à 6 atomes de carbone environ ;
(c) un agent réducteur d'odeur sélectionné à partir du groupe consistant en éthylène glycol, propylène glycol, diéthylène glycol, triéthylène glycol, polyéthylène glycol, polypropylène glycol et en mélanges de ceux-ci ;
(d) entre environ 0,02 et 10 pour cent en poids d'un surfactant anionique ayant une fraction hydrophile à charge négative sélectionnée à partir du groupe consistant en sulfates d'alkyle, sulfonates d'alkyle, sulfates d'alcool, sulfonates d'aryle alkyle, sulfosuccinates de dialkyle, et en mélanges de ceux-ci; et
(e) des sels tampon en quantités suffisantes pour stabiliser le pH de la solution dans des limites comprises entre 5,9 et 7,4 environ
dans laquelle les composés de glycol sont présents dans une proportion comprise entre 0,1 et 2,0 par rapport au dialdéhyde,
afin de détruire les mycobactéries sur une surface animée ou inanimée, la destruction des mycobactéries sur la surface animée ayant pour objet de nettoyer la peau.

2. Utilisation d'une composition, selon la revendication 1, dans laquelle ledit dialdéhyde est du glutaraldéhyde.

3. Utilisation d'une composition, selon les revendications 1 ou 2, dans laquelle l'agent de réduction de l'odeur est du triéthylène glycol.

4. Utilisation d'une composition, selon l'une quelconque des revendications de 1 à 3, dans laquelle ledit surfactant anionique est du dodécylsulfate de sodium.

5. Utilisation d'une composition, selon l'une quelconque des revendications de 1 à 4, dans laquelle le sel tampon est sélectionné à partir du groupe consistant en carbonates, bicarbonates, phosphates et borates de métaux alcalins, en carboxylates de sels organiques, et en mélanges de ceux-ci.

6. Utilisation d'une composition, selon une quelconque des revendications de 1 à 5, dans laquelle le pH de ladite composition est compris entre 5,9 et 6,32 environ, obtenu par le mélange de potassium monobasique ou de phosphate de sodium et de phosphate de sodium dibasique anhydre.

7. Utilisation d'une composition qui, selon l'une quelconque des revendications de 1 à 6, comprend l'application de ladite composition à une surface inanimée contaminée par des mycobactéries.

8. Utilisation d'une composition qui, selon l'une quelconque des revendications de 1 à 6, inclut la destruction des mycobactéries en frottant la peau contaminée avec ladite composition.

9. Utilisation d'une composition, selon l'une quelconque des revendications de 1 à 8, dans laquelle le mycobacterium est le M.tuberculosis.

10. Utilisation d'une composition, selon une quelconque des revendications de 1 à 9, dans laquelle ladite composition comprend environ de 0,25 % à 2 % de glutaraldéhyde, environ de 0,031 % à 0,25 % de surfactant anionique et une proportion glycol : glutaraldéhyde inférieure à deux.

11. Utilisation d'une composition, selon l'une quelconque des revendications précédentes afin de détruire des mycobactéries sur une surface inanimée.

12. Méthode de fabrication d'une composition liquide sans phénol telle que décrite dans l'une quelconque des revendications de 1 à 6 ou 10 dans laquelle les constituants (c), (d) et (e) sont dissous dans une solution de (a) et (b) sous des conditions de légère agitation et à température ambiante.
